(19) Europäisches Patentamt
European Patent Office
Office européen des brevets

(11) **EP 3 649 480 B1**

(12) **EUROPEAN PATENT SPECIFICATION**

(45) Date of publication and mention
of the grant of the patent:
**03.09.2025 Bulletin 2025/36**

(51) International Patent Classification (IPC):
**G01S 7/481** (2006.01)    **G02B 26/10** (2006.01)
**G02B 26/08** (2006.01)    **G01S 17/42** (2006.01)

(21) Application number: **18828134.9**

(52) Cooperative Patent Classification (CPC):
**G01S 7/4817; G01S 7/4814; G01S 17/42;**
**G02B 26/0833; G02B 26/101; G02B 26/105**

(22) Date of filing: **06.07.2018**

(86) International application number:
**PCT/US2018/041102**

(87) International publication number:
**WO 2019/010425 (10.01.2019 Gazette 2019/02)**

(54) **LADAR TRANSMITTER WITH REIMAGER**

LADAR-SENDER MIT REIMAGER

ÉMETTEUR LADAR AVEC RÉIMAGEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2017 US 201715644242**

(43) Date of publication of application:
**13.05.2020 Bulletin 2020/20**

(73) Proprietor: **Aeye, Inc.**
**Fairview Heights, IL 62208 (US)**

(72) Inventors:
• **DUSSAN, Luis Carlos**
**Dublin, California 94568 (US)**
• **DEMMER, David R.**
**Toronto, Ontario M4L 3C9 (CA)**
• **STOCKTON, John**
**Austin, Texas 78746 (US)**
• **STEINHARDT, Allan**
**Brentwood, California 94513 (US)**
• **COOK, David**
**San Ramon, California 94583 (US)**

(74) Representative: **Marks & Clerk LLP**
**15 Fetter Lane**
**London EC4A 1BW (GB)**

(56) References cited:
JP-A- 2012 252 068    US-A1- 2006 007 362
US-A1- 2011 149 360    US-A1- 2011 149 360
US-A1- 2012 249 996    US-A1- 2014 078 514
US-A1- 2015 378 011    US-A1- 2015 378 011
US-A1- 2017 307 876

EP 3 649 480 B1

## Description

## Field of the Invention:

The present invention relates to a ladar transmitter and a method for a ladar transmitter.

## Introduction:

It is believed that there are great needs in the art for improved computer vision technology, particularly in an area such as automobile computer vision. However, these needs are not limited to the automobile computer vision market as the desire for improved computer vision technology is ubiquitous across a wide variety of fields, including but not limited to autonomous platform vision (e.g., autonomous vehicles for air, land (including underground), water (including underwater), and space, such as autonomous land-based vehicles, autonomous aerial vehicles, etc.), surveillance (e.g., border security, aerial drone monitoring, etc.), mapping (e.g., mapping of subsurface tunnels, mapping via aerial drones, etc.), target recognition applications, remote sensing, safety alerting (e.g., for drivers), and the like).

As used herein, the term "ladar" refers to and encompasses any of laser radar, laser detection and ranging, and light detection and ranging ("lidar"). Ladar is a technology widely used in connection with computer vision. Ladar systems share the high resolution and intuitive feel of passive optic sensors with the depth information (ranging) of a radar system. In an exemplary ladar system, a transmitter that includes a laser source transmits a laser output such as a ladar pulse into a nearby environment. Then, a ladar receiver will receive a reflection of this laser output from an object in the nearby environment, and the ladar receiver will process the received reflection to determine a distance to such an object (range information). Based on this range information, a clearer understanding of the environment's geometry can be obtained by a host processor wishing to compute things such as path planning in obstacle avoidance scenarios, way point determination, etc. However, conventional ladar solutions for computer vision problems suffer from high cost, large size, large weight, and large power requirements as well as large data bandwidth use. The best example of this being vehicle autonomy. These complicating factors have largely limited their effective use to costly applications that require only short ranges of vision, narrow fields-of-view and/or slow revisit rates.

For example, ladar systems are known in the art where a ladar transmitter illuminates a large number of range points simultaneously. Flash ladar is an example of such a system. However, these conventional systems are believed to suffer from a number of shortcomings. For example, flash ladar systems require a very high energy per pulse laser, which is not only costly but can also be an eye hazard. Furthermore, the read-out integrated circuits for flash ladar systems are typically quite noisy. Also, the wide field-of-view signal-to-noise ratio (SNR) for flash ladar systems is typically very low, which results in short ranges, thereby detracting from their usefulness.

In an effort to satisfy the needs in the art for improved ladar-based computer vision technology, the inventor has disclosed a number of embodiments for methods and systems that apply scanning ladar transmission concepts in new and innovative ways, as described in U.S. patent application serial no. 62/038,065, filed August 15, 2014 and U.S. Pat. App. Pubs. 2016/0047895, 2016/0047896, 2016/0047897, 2016/0047898, 2016/0047899, 2016/0047903, and 2016/0047900.

Moreover, US 2011/149360 A1 describes an optical scanner arranged as an image projector, designed to produce an image around 50 cm away from the projector, but this reference fails to describe any application or extension to a ladar transmitter that scans mirrors to support targeting of ladar pulses.

US 2015/378011 A1 discloses a compressive scanning lidar for which the compressive scanning is achieved via control over pixel readout in its photodetector receiver, but this reference fails to describe an approach to compressive sensing where compressive sensing is achieved on the transmission side of the system such as through intelligent selection of which range points in a field of view are to be targeted with ladar pulses.

JP 2012 252068 discloses an optical scanning device that scans light using an elliptical mirror positioned between two scan mirrors; but fails to describe an approach where the mirror positioned between the two scan mirrors is ellipsoidal rather than elliptical. Further still this reference also fails to describe an approach to compressive sensing where compressive sensing is achieved on the transmission side of the system such as through intelligent selection of which range points in a field of view are to be targeted with ladar pulses.

The inventor believes that there are needs in the art for further improvements on how scanning ladar transmitters can be designed to optimize their gaze on regions of interest in the environment. While radars have been highly optimized with scheduling methods to dwell (gaze) where gaze is needed when gaze is needed, conventional ladar systems today do not share this dwell optimality. This is because ladar systems suffer from the very thing that makes them attractive: their resolution.

This is because, while even the world's largest radars have thousands of beam choices upon which to dwell, even a small automotive ladar system fitting in the palm of the hand routinely has 100,000+ or even millions of choices for dwell. This leads to two general design choices for ladar engineers: (i) mechanically step from dwell to dwell, or (ii) use resonant mirrors that rapidly scan through the scene. Design approach (i) is precise and adaptable but is extremely slow in environments where there are large numbers of interrogation cells present.

Design approach (ii) has historically been non-adaptable. To improve upon these conventional design approaches, the inventors disclose techniques by which one can reduce the disadvantages of resonant mirror-based ladar while achieving much of the acuity and specificity that historically has only been available to mechanical stepping techniques and without losing the speed advantages of resonant scanning mirrors.

In example embodiments, the inventors disclose a compact beam scanner assembly that includes an ellipsoidal conjugate reflector reimaging mirror. The ellipsoidal mirror can be positioned optically between first and second scanable mirrors. A lens can be positioned optically upstream from the first scanable mirror. Such an arrangement can provide (among other benefits) a compact beam scanner design where the two scanable mirrors are equally sized and placed closely together within the assembly. Moreover, reimaging can be especially useful when used in combination with field inversion, since it limits the additional upscope headroom needed for an inverter lens.

These and other features and advantages of the present invention will be described hereinafter to those having ordinary skill in the art.

### Summary:

The invention is set out in the appended set of claims.

### Brief Description of the Drawings:

Figure 1A and B illustrate example embodiments of ladar transmitter/receiver systems.

Figure 2 depicts an example embodiment of a ladar transmitter.

Figure 3 shows an example embodiment of an ellipsoidal conjugate reflector (ECR) reimaging system.

Figure 4 displays the scanned field for a conventional scanner as configured without ray fan aligned reimaging optics.

Figure 5 displays an embodiment of a reimager with geometry chosen per our disclosed design formula. Note that the ray fan directed downward from the reimager lies in a plane containing the center of the second scanning mirror.

Figure 6 displays the elimination of distortions in the scanned output field made possible by using an ellipsoidal reflector in a manner consistent with an example embodiment.

Figure 7 is a side-looking schematic of an example embodiment of an ECR 2D scanner.

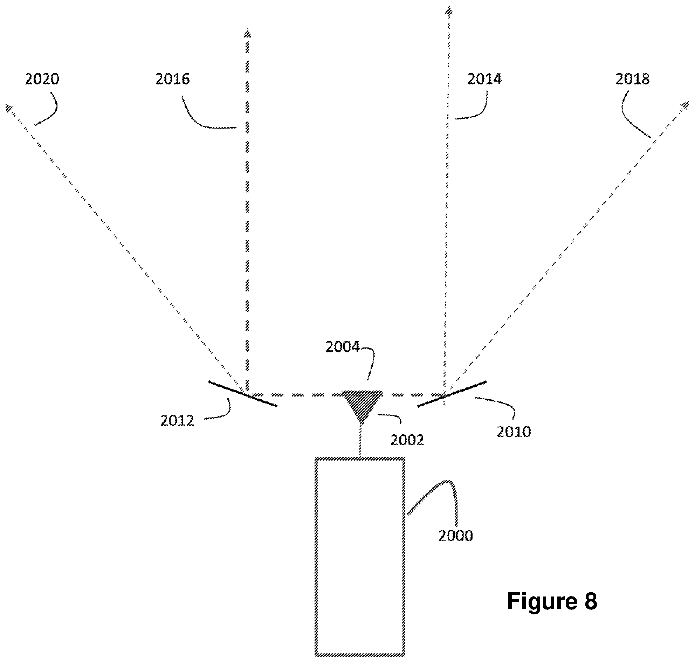

Figure 8 shows the use of paired "kissing" mirrors as a virtual, low cost, source of field inversion.

### Detailed Description of Example Embodiments:

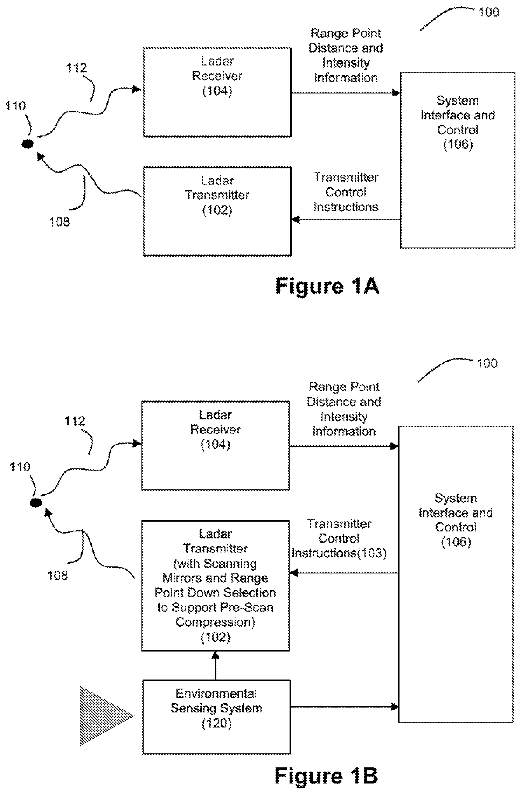

Figure 1A illustrates an example embodiment of a ladar transmitter/receiver system 100. The system 100 includes a ladar transmitter 102 and a ladar receiver 104, each in communication with system interface and control 106. The ladar transmitter 102 is configured to transmit a plurality of ladar pulses 108 toward a plurality of range points 110 (for ease of illustration, a single such range point 108 is shown in Figure 1A). Ladar receiver 104 receives a reflection 112 of this ladar pulse from the range point 110. Ladar receiver 104 is configured to receive and process the reflected ladar pulse 112 to support a determination of range point distance [depth] and intensity information. In addition the receiver 104 determines spatial position information [in horizontal and vertical orientation relative to the transmission plane] by any combination of (i) prior knowledge of transmit pulse timing, and (ii) multiple detectors to determine arrival angles.

In example embodiments, the ladar transmitter 102 can take the form of a ladar transmitter that includes scanning mirrors. Furthermore, in an example embodiment, the ladar transmitter 102 uses a range point down selection algorithm to support pre-scan compression (which can be referred herein to as "compressive sensing"), as shown by Figure 1B. Such an embodiment may also include an environmental sensing system 120 that provides environmental scene data to the ladar transmitter 102 to support the range point down selection. Specifically, the control instructions will instruct a laser source when to fire, and will instruct the transmitter mirrors where to point. Example embodiments of such ladar transmitter designs can be found in U.S. patent application serial no. 62/038,065, filed August 15, 2014 and U.S. Pat. App. Pubs. 2016/0047895, 2016/0047896, 2016/0047897, 2016/0047898, 2016/0047899, 2016/0047903, and 2016/0047900. Through the use of pre-scan compression, such a ladar transmitter can better manage bandwidth through intelligent range point target selection. Example embodiments of ladar receiver 104 can be found in U.S. patent application serial no. 62/297,126, filed February 18, 2016, US Patent Application Publications 2017/0242102, 2017/0242105, 2017/0242106, 2017/0242107, and 2017/0242109, and U.S. Patent No. 9,933,513. While these referenced patent applications describe example embodiments for the ladar transmitter 102 and ladar receiver 104, it should be understood that practitioners may choose to implement the ladar transmitter 102 and/or ladar receiver 104 differently than as disclosed in these referenced patent applications.

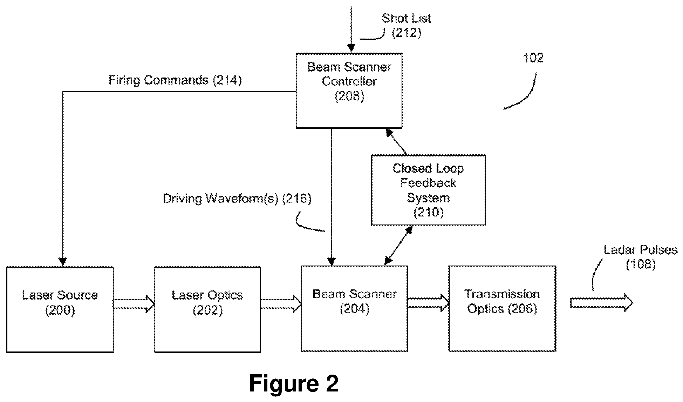

Figure 2 depicts an example embodiment for a ladar transmitter 104 as disclosed by the above-referenced patent applications. The ladar transmitter 104 can include a laser source 200 in optical alignment with laser optics 202, a beam scanner 204, and transmission optics 206. These components can be housed in a packaging that provides a suitable shape footprint for use in a desired application. For example, for embodiments where the laser source 200 is a fiber laser or fiber-coupled laser, the laser optics 202, the beam scanner 204, and any receiver components can be housed together in a first packaging that does not include the laser source 200. The laser source 200 can be housed in a second packaging, and a fiber can be used to connect the first packaging with the second packaging. Such an arrangement permits the first packaging to be smaller and more compact due to the absence of the laser source 200. Moreover, because the laser source 200 can be positioned remotely from the first packaging via the fiber connection, such an arrangement provides a practitioner with greater flexibility regarding the footprint of the system.

Based on the control information transmitter control instructions, such as a shot list 212 generated by system control 106, a beam scanner controller 208 can be configured to control the nature of scanning performed by the beam scanner 204 as well as control the firing of the laser source 200. A closed loop feedback system 210 can be employed with respect to the beam scanner 204 and the beam scanner controller 208 so that the scan position of the beam scanner 204 can be finely controlled, as explained in the above-referenced patent applications.

The laser source 200 can be any of a number of laser types suitable for ladar pulse transmissions as described herein.

For example, the laser source 200 can be a pulsed fiber laser. The pulsed fiber laser can employ pulse durations of around 1-4 ns, and energy content of around 0.1-100 $\mu$J/pulse. The repetition rate for the pulsed laser fiber can be in the kHz range (e.g., around 1-500 kHz). Furthermore, the pulsed fiber laser can employ single pulse schemes and/or multi-pulse schemes as described in the above-referenced patent applications. However, it should be understood that other values for these laser characteristics could be used. For example, lower or higher energy pulses might be employed. As another example, the repetition rate could be higher, such as in the 10's of MHz range (although it is expected that such a high repetition rate would require the use of a relatively expensive laser source under current market pricing).

As another example, the laser source 200 can be a pulsed IR diode laser (with or without fiber coupling). The pulsed IR diode laser can employ pulse durations of around 1-4 ns, and energy content of around 0.01-10 $\mu$J/pulse. The repetition rate for the pulsed IR diode fiber can be in the kHz or MHz range (e.g., around 1 kHz - 5 MHz). Furthermore, the pulsed IR diode laser can employ single pulse schemes and/or multi-pulse schemes as described in the above-referenced patent applications.

The laser optics 202 can include a telescope that functions to collimate the laser beam produced by the laser source 200. Laser optics can be configured to provide a desired beam divergence and beam quality. As example, diode to mirror coupling optics, diode to fiber coupling optics, and fiber to mirror coupling optics can be employed depending upon the desires of a practitioner.

The beam scanner 204 is the component that provides the ladar transmitter 104 with scanning capabilities such that desired range points can be targeted with ladar pulses. The beam scanner receives an incoming ladar pulse from the laser source 200 (by way of laser optics 202) and directs this ladar pulse to a desired downrange location (such as a range point on the shot list) via reflections from movable mirrors. Mirror movement can be controlled by one or more driving voltage waveforms 216 received from the beam scanner controller 208. Any of a number of configurations can be employed by the beam scanner 204. For example, the beam scanner can include dual microelectromechanical systems (MEMS) mirrors, a MEMS mirror in combination with a spinning polygon mirror, or other arrangements. An example of suitable MEMS mirrors are single surface tip/tilt/piston MEMS mirrors. By way of further example, in an example dual MEMS mirror embodiment, a single surface tip MEMS mirror and a single surface tilt MEMS mirror can be used. However, it should be understood that arrays of these MEMS mirrors could also be employed. Also, the dual MEMS mirrors can be operated at any of a number of frequencies, examples of which are described in the above-referenced patent applications, with additional examples being discussed below. As another example of other arrangements, a miniature galvanometer mirror can be used as a fast-axis scanning mirror. As another example, an acousto-optic deflector mirror can be used as a slow-axis scanning mirror. Furthermore, for an example embodiment that employs the spiral dynamic scan pattern discussed below, the mirrors can be resonating galvanometer mirrors. Such alternative mirrors can be obtained from any of a number of sources such as Electro-Optical Products Corporation of New York. As another example, a photonic beam steering device such as one available from Vescent Photonics of Colorado can be used as a slow-axis scanning mirror. As still another example, a phased array device such as the one being developed by the DARPA SWEEPER program could be used in place of the fast axis and/or slow axis mirrors. More recently, liquid crystal spatial light modulators, such as those offered by Boulder Nonlinear Systems and Beamco, can be considered for use.

Also, in an example embodiment where the beam scanner 204 includes dual mirrors, the beam scanner 204 may include relay imaging optics between the first and second mirrors, which would permit that two small fast axis mirrors be used (e.g., two small fast mirrors as opposed to one small fast mirror and one long slower mirror).

The transmission optics 206 are configured to transmit the ladar pulse as targeted by the beam scanner 204 to a desired location through an aperture. The transmission optics can have any of a number of configurations depending upon the desires of a practitioner. For example, the environmental sensing system 106 and the transmitter 104 can be combined optically into one path using a dichroic beam splitter as part of the transmission optics 206. As another example, the transmission optics can include magnification optics as described in the above-referenced patent applications or descoping [e.g., wide angle] optics. Further still, an alignment pickoff beam splitter can be included as part of the transmission optics 206.

*Field Splitting and Inversion to Optimize the Ladar Transmitter's Gaze on Desirable Regions within the Scan Area:*

The beam scanner controller 208 can provide voltage waveforms 214 to the beam scanner 204 that will drive the mirrors of the beam scanner to a desired scan position pairing (e.g., scan angles). The voltage waveforms 214 will define a scan pattern for the targeting of the ladar transmitter 102 within a scan area. The firing commands 214 generated by the beam scanner controller 208 can be coordinated with the scan pattern so that the ladar transmitter 102 fires ladar pulses toward desired range points within the scan area. Example embodiments for the beam scanner controller 208 are described in the above-referenced patent applications.

*Ellipsoidal Reimaging Mirror for Compact Beam Scanner Assembly:*

The inventors recognize that there is also a desire in the art for compact beam scanner assemblies. For example, the inventors believe there is a growing interest in compact 2D scan mirrors for automotive and airborne ladar, biomedical imaging (i.e. endoscopy), virtual and augmented reality, and confocal active imaging. Scan mirrors, whether implemented as galvanometers, MEMS, or other mirrors, are often used in laser scanning systems due to the associated high scan speed and compact form factor. The fastest real scan rate and tilt angle is usually obtained by cascading a pair of in-plane and out-of-plane single axis (as opposed to dual axis) MEMS devices. The second mirror in the light path has a larger spot size than the first due to beam divergence. The inventors disclose a device which reimages the spot beam on the second mirror, thereby shrinking the required mirror size. Not only does this reduce the form factor of the scanner, it also increases scan speed, and/or maximum tilt angle, and therefore scan field of view, since mirror area is proportional to torque and scan speed.

In an example embodiment, two scan mirrors (e.g. MEMS mirrors) can be placed at the foci of an ellipsoid defined by an ellipsoidal reflector/mirror. A focusing lens (or mirror) can be positioned to condition the input beam prior to directing the beam onto the first scan mirror in order that the output beam can remain collimated. This is optically equivalent to placing an image of the first scan mirror at the location of the second scan mirror, a situation known as being optically conjugate. For this reason, the reflector assembly can be referred to as an elliptical conjugate reflector (ECR) assembly. In an example embodiment, only a relatively small portion of the complete ellipsoid will intercept light reflected from the first scan mirror, as determined by the angle of incidence of the light beam at the first scan mirror. This allows construction of the ECR using only the corresponding section of the ellipsoid. This in turn provides a ready mechanism for allowing both the incoming and outgoing light beams to enter and leave the assembly.

Analysis of the imaging properties of the ellipsoid shows that the angle of incidence at the first scan mirror can be chosen so that the reflected ray fan from the first scan mirror towards the reflecting surface of the ellipsoid interior is oriented so that the intersection of all the rays in the ensuing fan lie in a plane which also contains the center of the second scan mirror. We disclose a design formula that ensures this coplanar dependency, with or without a tilt offset on the scanners. A tilt offset allows for flexibility in the length, height, and width of the assembly, which has the benefit of increasing the trades available to a practitioner.

In addition to 2D scan applications, the ECR techniques disclosed herein offers improvements in any cascaded mirror assembly. Cascaded mirrors increase overall scan aperture, and the reimager disclosed herein renders these systems more compact as well. In contrast to prior art, the ECR solutions disclosed herein provide a more compact solution (see, for example, an embodiment that uses a single mirror for reimaging) without introducing artifacts into the scanned field.

A laser can be scanned with a pair of single axis mirrors. If the mirrors are attached to a solenoid, this is referred to as a galvanometric scanner. In many modern compact laser systems (which includes copy machines, bar code readers, and ladar systems), MEMS single chip devices are often used as the tilt mirrors to reduce size, weight, and cost, while increasing scan speed. Since it is desired that the mirrors freely articulate, and the light cone communicating between them be unoccluded, there are hard constraints on how close the distance between the articulating mirrors can be. Since the second scan mirror must be large enough to accommodate the entire range of angles induced by the first scan mirror, it is conventional that the second scan mirror in general be larger than the first scan mirror. This in turn reduces achievable maximum scan angle, or maximum achievable scan frequency, or both. Since both are important design parameters for practitioners of the laser arts, the inventors disclose in an example embodiment a design that allows a significant increase in scan volume by rendering a system with two scanning mirrors (such as MEMS devices) of small and equal size. The limitation on mirror size is a function of both laser beam waist and scan volume. Reimaging allows a MEMS device on the order of a few millimeters. To solve this problem in the art, the inventors disclose the use of an ellipsoidal reimaging reflector that is positioned optically between the first and second scan mirrors. Such a design can preserve the simplicity of planar MEMS mirrors as the scanable mirrors while also offering improved performance. Moreover, this ellipsoidal reflector can be the single reimaging mirror used by the system.

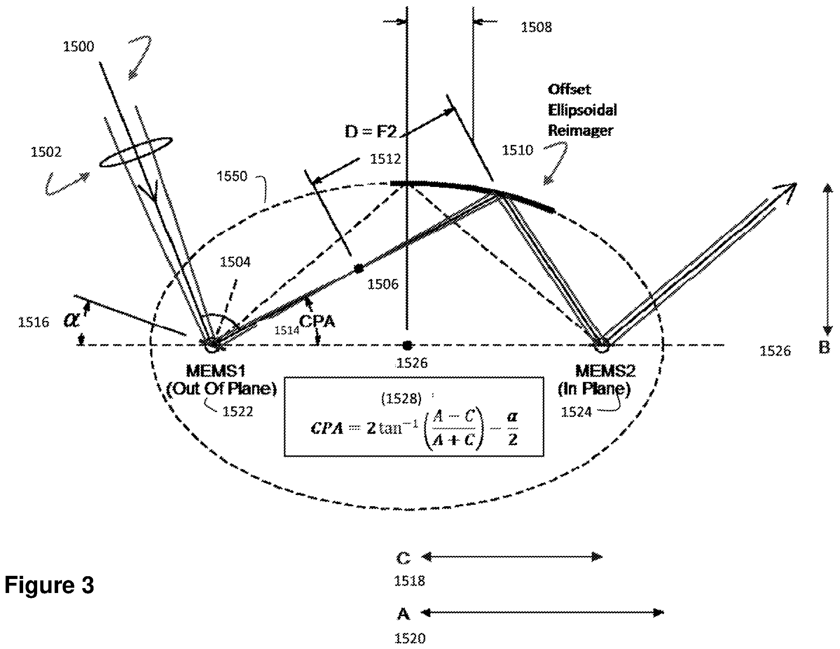

Figure 3 shows an example embodiment of a design employing an ellipsoidal reflector 1510. The reference H. Rehn, "Optical Properties of Elliptical Reflectors", Opt. Eng. 43(7) 1480 (2004)provides additional details including optical properties associated with an ellipsoidal reflector. It should be understood that when reflector 1510 is referred to as an ellipsoidal reflector, this means that the reflector 1510 exhibits a curvature that corresponds to at least a portion of an ellipsoid shape. Thus, the ellipsoidal reflector 1510 preferably exhibits a shape and curvature corresponding to a section of a hollow ellipsoid. The example system shown by Figure 3 uses the ellipsoidal reflector 1510 in an offset configuration. Also, in an example embodiment, the specific ellipsoidal structure used for reflector 1510 can be a prolate spheroidal shape. Such ellipsoids have rotational symmetry about the major axis, and this structure allows physical separation of the two scan mirrors.

Consider an ellipsoid of revolution defined by the formula $\frac{z^2}{A^2} + \frac{r^2}{B^2} = 1$, where $r^2 = x^2 + y^2$. The projection of this into a plane is an ellipse 1550 with horizontal length of 2A (see 1520 in Figure 3 which identifies the length A), and vertical height 2B (see 1526 in Figure 3 which identifies the height B). The scan mirrors 1522 and 1524 are each set at a distance C (see 1518 in Figure 3) from the ellipse center 1526. For these locations to be at the focal points of the ellipse, the value of C should be defined as $C = \sqrt{A^2 - B^2}$.

Upstream from the reflector 1510 we insert a lens 1502, which focuses the light emitted from the source 1500. As explained below, the ellipsoidal reflector 1510 and lens 1502 can serve jointly as an afocal lensing system. The shape and position of lens 1502 is chosen so that the focal point 1506 lies between the first scan mirror 1522 and the reflective surface of the ellipsoidal reflector 1510. Recall, that by definition, the focal point 1506 represents the location where the spot size is at a minimum. The distance from 1506 to the location on the ellipsoidal mirror whereupon the light source projects we denote by F2 (1512). It is desirable that the light beam incident on the second scan mirror be collimated, in order that the output of the scan mirror 1522 is also collimated. Hence, the optimum location of the focal point 1506 as determined by the characteristics of the input beam 1500 and focusing element 1502 can be made to conform to the requirement that the distance 1512 is equal to the effective focal length F2 of the ellipsoid corresponding to ellipse 1550 defined by the shape and curvature of ellipsoidal reflector 1510 at the point of reflection from 1510.

The angle α, 1516, is the offset tilt of the first scan mirror 1522. Note that as the tilt is varied on the 1st scan mirror 1522, the angle of incidence (AOI) 1504 also varies. This does not constitute a requirement for using the system but offers additional flexibility to practitioners wishing to incorporate the system by decoupling the trajectory of the input light from subsequently described geometric requirements. We denote by the offset 1508 as the distance from the center 1526 of the ellipsoid projection 1550 to the center of the portion of the reflective surface of the ellipsoidal reflector 1510.

If a point source is positioned at one of the two foci of a prolate spherical ellipsoid, then light will all arrive at the second focus without aberration, and the total path length for all light rays will be equal. Therefore, in principle one can direct a light beam onto the first scan mirror 1522 from any angle and it will reflect onto the second scan mirror 1524 as long as that second scan mirror 1524 is located at the second focus of the ellipsoid.

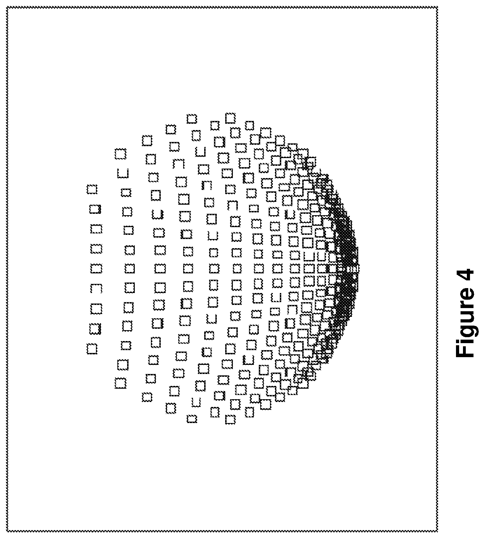

A more important factor influencing the beam input angle arises from the desire to optimize the characteristics of the field covered by the scan pattern of the output beam. This can be appreciated by considering the operation of an ideal two-mirror scanning system operating on optical rays with no intervening optics. In such a system, the accumulation of rays reflected for various tilt angles of the first mirror results in a set of reflected rays at various angles referred to here as a ray fan. It is desirable that all the rays in this fan lie in the same plane. This ray fan is then incident on a second mirror of sufficient extent that all of the rays in the fan can be accommodated. When this second mirror is scanned in a direction orthogonal to the first mirror, the resulting 2D output fan has the property that, when projected onto a plane perpendicular to the center ray, the 2D output fan forms a scan pattern in which the scan rows are linear and horizontal. The plane of incidence of each member of the ray fan emanating from the first mirror, when incident on the second mirror, will then be rotated to an extent determined by the magnitude of the scan angle imparted by the X mirror. This results in a small pincushion distortion in the X direction only, which is visible in Figure 4 as a deviation from the exact rectilinear pattern illustrated by the rectangular boundary. This distortion can be readily accommodated by either adjusting the amplitude of the X mirror scan for each Y position, or adjusting the laser pulse timing in the ladar system.

Consider the ray fan from the first scan mirror 1522 as it encounters the inside reflective surface of the ellipsoidal reflector 1510, from which it reflects down onto the second scan mirror 1524. For an example embodiment, in order for the scanner to operate in the same desirable fashion as the ideal mirror pair previously described, after reflection from the ellipsoidal reflector 1510, the fan of rays now converging onto the center of the second scan mirror 1524 should all lie in the same plane. This can occur only for the case where the intersection of the center ray of the fan lies directly above the second scan mirror 1524.

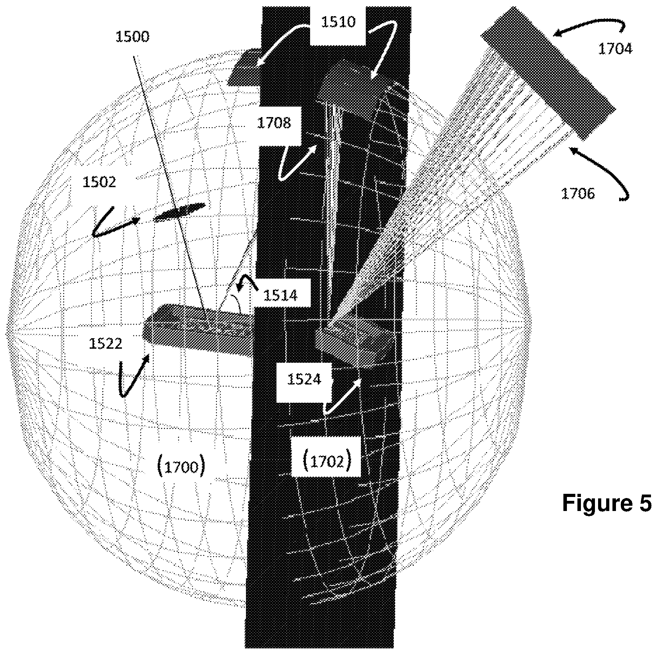

Figure 5 illustrates a 3-dimensional view of the arrangement shown by Figure 3, with a focus on the ray fan geometry. In Figure 5, various elements of Figure 3 are again labeled (1500, 1502, 1522, 1524, 1510, 1514), and the 3D ellipsoid is now drawn as a wire mesh, 1700. Figure 5 also adds the following labels: 1704 (for the image plane as presented to the environmental scene), 1706 (for the fan beam from the second scan mirror 1524, 1708 (for the fan beam reflected by ellipsoidal reflector 1510). Figure 5 also shows the plane 1702 which encompasses the fan beam 1708. It is useful to note that, in the case of an arbitrary geometry, the beam reflecting off the ellipsoidal reflector 1510 onto the second scan mirror 1524 has a fan beam 1708 that is not planar.

For an example embodiment, making this fan beam 1708 planar places a requirement on the angle of reflection from the first scan mirror 1522. This angle is abbreviated the CPA (see 1514 in Figure 3) for the coplanar angle. CPA is the angle subtended between the symmetry axis of the ellipsoid and the intersection of the ellipsoid with the perpendicular line passing through the center of the second scan mirror 1524. CPA can be calculated from the values of A and C which serve to define the ellipsoid 1550, using the following expression (shown as 1528 in Figure 3):

$$ CPA = 2tan^{-1}\left(\frac{A-C}{A+C}\right). $$

To aid in ensuing design trades, we can add in an optional offset in tilt angle, $\alpha$, to the 1$^{st}$ scan mirror 1522. We then obtain a modified formula for the CPA, shown as 1528 in Figure 3 and re-created here for convenience:

$$ CPA = 2tan^{-1}\left(\frac{A-C}{A+C}\right) - \frac{\alpha}{2}. $$

Note that CPA 1528 is no longer mathematically exact (as is in the first formula that did not include the addition of the optional offset tilt angle), but is rather an approximation sufficient for practical use.

Note that light does not interact with the ECR following reflection from the second scan mirror 1524, so an offset angle can be imposed on the second scan mirror 1524 to facilitate exit of the scanned volume without prejudice to performance.

The magnification between a collimated input 1500 and a collimated exit beam (Figure 3) is given by the ratio M=F2/F1. This is a consequence of the lens equation as applied to cascaded optical systems. In practice, a practitioner may want this ratio to be near unity, to keep both scanning mirrors 1522 and 1524 equal in size.

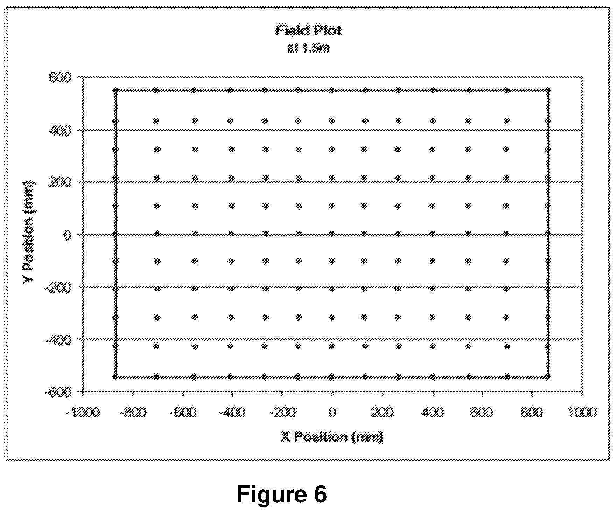

Figures 4 and 5 show how the CPA constraint can impact the construction of useful ECR. Figure 4 shows an example of the field resulting from a 24 degree x 20 degree (optical) scan of X and Y angles, respectively, when no attention is paid to ensuring the ECR is constructed and used with the CPA constraint. Note that Figure 4 shows strong curvature in both Y and X scan lines, making this pattern difficult to match with a rectilinear coordinate system, especially problematic for co-boresiting camera registration with passive optics. Figure 6 shows the same scan field operated with the ECR constrained to operate according to 1528. In contrast to Fig. 4, the scan rows (constant Y angle) are linear, and the pincushion distortion along the X direction is equivalent to that seen in the ideal (albeit non reimaged and therefor non-compact) system with no intervening optics. Note that in this pattern distortions in the second (vertical) scan angle mathematically vanish for alpha=0. The residual distortion in the first (horizontal) scan direction includes a minor over-scan similar to a 1D pincushion distortion, and is easily compensated in post processing.

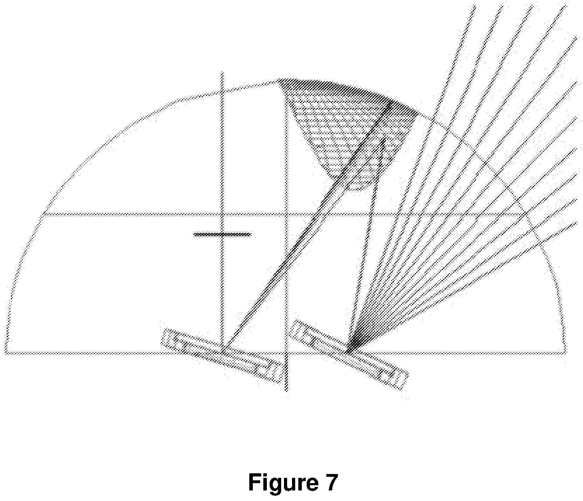

Figure 7 shows the elegant form factor compaction we can obtain in an example embodiment. The two scan mirrors, viewed from the side, are tightly packed with millimeter scales that are eminently feasible for a nominal beam waist of order 100um.Recall the direction of the first mirror scan in this example embodiment is out of the plane, i.e. towards the viewer, while the second mirror scans within the plane containing the image itself. For brevity and clarity labels are omitted in Figure 7, but visible are the CPA angle, the scan mirror input and output rays, the input light beam source and input lens, and the ellipsoidal reflector. The 3D nature of this mirror is also visible in Figure 7.

While the invention has been described above in relation to its example embodiments, various modifications may be made thereto that still fall within the invention's scope. Such modifications to the invention will be recognizable upon review of the teachings herein. For example, while Lissajous scan patterns are disclosed as being a prime example of scan patterns that can be enhanced via field inversion and induced periodic phase drift, it should be understood that spiral scan patterns can be similarly enhanced. Such patterns are often implemented as dampened Lissajous patterns where the amplitude is slowly modulated.

**Claims**

1.  A ladar transmitter that includes a scanner apparatus, the ladar transmitter comprising:

    a first scanable mirror (1522);
    a second scanable mirror (1524);
    a lens (1502) that is positioned optically upstream from the first scanable mirror;
    an ellipsoidal mirror (1510) that is positioned optically between the first scanable mirror and the second scanable mirror;
    a light source (1500, 200) positioned optically upstream from the lens, wherein the light source is configured to transmit light in the form of ladar pulses (108) through the lens onto the first scanable mirror, whereupon the first scanable mirror reflects the ladar pulses toward the ellipsoidal mirror, and whereupon the ellipsoidal mirror reflects the ladar pulses toward the second scanable mirror;

a beam scanner controller (208) configured to drive (i) the first scanable mirror along a first axis and (ii) the second scanable mirror along a second axis to define a scan pattern within a scan area; and

a processor in cooperation with the light source and the beam scanner controller, the processor configured to intelligently select, via compressive sensing, a subset of range points for targeting with the ladar pulses via the first scanable mirror, the ellipsoidal mirror, and the second scanable mirror.

2. The ladar transmitter of claim 1 wherein the ellipsoidal mirror is positioned as an offset ellipsoidal reimager.

3. The ladar transmitter of any of claims 1-2 wherein the first scanable mirror, the second scanable mirror, and the ellipsoidal mirror are positioned such that, with respect to an ellipsoid (1550), (i) the first scanable mirror has a central region that is positioned at a first focus of the ellipsoid, (ii) the second scanable mirror has a central region that is positioned at a second focus of the ellipsoid, and (iii) the ellipsoidal mirror lies along the ellipsoid at a position that is optically between the first scanable mirror and the second scanable mirror.

4. The ladar transmitter of claim 3 wherein the ellipsoid has a major axis and an axis of symmetry along the major axis, and wherein the ellipsoidal mirror position is off the axis of symmetry.

5. The ladar transmitter of any of claims 1-4 wherein the first scanable mirror and the second scanable mirror comprise MEMS mirrors.

6. The ladar transmitter of any of claims 1-5 wherein the lens is adapted and positioned to provide a focal point (1506) for incident light, wherein the focal point lies between the first scanable mirror and the ellipsoidal mirror.

7. The ladar transmitter of any of claims 1-6 wherein the second scanable mirror has a central tilt axis, wherein a 3D ellipsoid (1550) exhibits a horizontal width, wherein a distance A corresponds to half of the horizontal width, and wherein a distance C corresponds to a distance from a center (1526) of the ellipsoid to the central tilt axis of the second scanable mirror;

wherein a coplanar angle, "CPA", for the first scanable mirror is defined such that

$$CPA = 2tan^{-1}\left(\frac{A-C}{A+C}\right).$$

8. The ladar transmitter of any of claims 1-7 wherein the first scanable mirror has a title angle $\alpha$, wherein the second scanable mirror has a central tilt axis, wherein a 3D ellipsoid (1550) exhibits a horizontal width, wherein a distance A corresponds to half of the horizontal width, and wherein a distance C corresponds to a distance from a center (1526) of the ellipsoid to the central tilt axis of the second scanable mirror;

wherein a coplanar angle, "CPA", for the first scanable mirror is defined such that

$$CPA = 2tan^{-1}\left(\frac{A-C}{A+C}\right) - \frac{\alpha}{2}.$$

9. The ladar transmitter of any of claims 1-8 further comprising:
an optical field splitter/inverter (300) positioned optically downstream from the first and second scanable mirrors to split and invert a scan area defined by the first and second scanable mirrors.

10. The ladar transmitter of any of claims 1-9 wherein the first and second scanable mirrors are positioned in a side-by-side arrangement.

11. The ladar transmitter of any of claims 1-10, wherein the first and second scanable mirrors have the same size.

12. A light steering method for a ladar transmitter, the method comprising:

transmitting light toward a lens (1502) from a light source (1500, 200) positioned optically upstream from the lens, wherein the transmitted light comprises a plurality of ladar pulses (108); the lens passing the transmitted ladar pulses to a first scanning mirror (1522);
the first scanning mirror reflecting the transmitted ladar pulses toward an ellipsoidal mirror (1510);
the ellipsoidal mirror reflecting the transmitted ladar pulses toward a second scanning mirror (1524);
the second scanning mirror reflecting the transmitted ladar pulses;
a beam scanner controller (208) driving (i) the first scanning mirror along a first axis and (ii) the second scanning mirror along a second axis to define a scan pattern within a scan area; and
a processor, in cooperation with the light source and the beam scanner controller, intelligently selecting, via compressive sensing, a subset of range points for targeting with the ladar pulses from the light source via the first scanning mirror, the ellipsoidal mirror, and the second scanning mirror.

13. The method of claim 12 wherein the ellipsoidal mirror is positioned as an offset ellipsoidal reimager.

14. The method of any of claims 12-13 wherein the first scanning mirror, the second scanning mirror, and the ellipsoidal mirror are positioned such that, with respect to an ellipsoid, (i) the first scanning mirror has a central region that is positioned at a first focus of the ellipsoid, (ii) the second scanning mirror has a central region that is positioned at a second focus of the ellipsoid, and (iii) the ellipsoidal mirror lies along the ellipsoid at a position that is optically between the first scanning mirror and the second scanning mirror.

**Patentansprüche**

1. Ladar-Übertrager, der ein Abtastgerät einschließt, wobei der Ladar-Übertrager Folgendes umfasst:

   einen ersten abtastbaren Spiegel (1522);
   einen zweiten abtastbaren Spiegel (1524);
   eine Linse (1502), die optisch stromaufwärts von dem ersten abtastbaren Spiegel positioniert ist;
   einen ellipsoiden Spiegel (1510), der optisch zwischen dem ersten abtastbaren Spiegel und dem zweiten abtastbaren Spiegel positioniert ist;
   eine Lichtquelle (1500, 200), die optisch stromaufwärts von der Linse positioniert ist, wobei die Lichtquelle konfiguriert ist, um Licht in Form von Ladar-Impulsen (108) durch die Linse auf den ersten abtastbaren Spiegel zu übertragen, woraufhin der erste abtastbare Spiegel die Ladar-Impulse in Richtung des ellipsoiden Spiegels reflektiert und woraufhin der ellipsoide Spiegel die Ladar-Impulse in Richtung des zweiten abtastbaren Spiegels reflektiert;
   eine Strahlabtaster-Steuerung (208), die konfiguriert ist, um (i) den ersten abtastbaren Spiegel entlang einer ersten Achse und (ii) den zweiten abtastbaren Spiegel entlang einer zweiten Achse anzusteuern, um ein Abtastmuster innerhalb eines Abtastbereichs zu definieren; und
   einen Prozessor in Zusammenwirkung mit der Lichtquelle und der Strahlabtaster-Steuerung, wobei der Prozessor konfiguriert ist, um über kompressive Erfassung intelligent eine Teilmenge von Entfernungspunkten zum Anvisieren mit den Ladar-Impulsen über den ersten abtastbaren Spiegel, den ellipsoiden Spiegel und den zweiten abtastbaren Spiegel auszuwählen.

2. Ladar-Übertrager nach Anspruch 1, wobei der ellipsoide Spiegel als versetzter ellipsoider Reimager positioniert ist.

3. Ladar-Übertrager nach einem der Ansprüche 1 bis 2, wobei der erste abtastbare Spiegel, der zweite abtastbare Spiegel und der ellipsoide Spiegel so positioniert sind, dass in Bezug auf ein Ellipsoid (1550) (i) der erste abtastbare Spiegel einen zentralen Bereich aufweist, der an einem ersten Brennpunkt des Ellipsoids positioniert ist, (ii) der zweite abtastbare Spiegel einen zentralen Bereich aufweist, der an einem zweiten Brennpunkt des Ellipsoids positioniert ist, und (iii) der ellipsoide Spiegel entlang des Ellipsoids an einer Position liegt, die optisch zwischen dem ersten abtastbaren Spiegel und dem zweiten abtastbaren Spiegel liegt.

4. Ladar-Übertrager nach Anspruch 3, wobei das Ellipsoid eine Hauptachse und eine Symmetrieachse entlang der Hauptachse aufweist und wobei die Position des ellipsoiden Spiegels außerhalb der Symmetrieachse liegt.

5. Ladar-Übertrager nach einem der Ansprüche 1 bis 4, wobei der erste abtastbare Spiegel und der zweite abtastbare Spiegel MEMS-Spiegel umfassen.

6. Ladar-Übertrager nach einem der Ansprüche 1 bis 5, wobei die Linse so angepasst und positioniert ist, dass sie einen Brennpunkt (1506) für einfallendes Licht bereitstellt, wobei der Brennpunkt zwischen dem ersten abtastbaren Spiegel und dem ellipsoiden Spiegel liegt.

7. Ladar-Übertrager nach einem der Ansprüche 1 bis 6, wobei der zweite abtastbare Spiegel eine zentrale Neigungsachse aufweist, wobei ein 3D-Ellipsoid (1550) eine horizontale Breite aufweist, wobei eine Entfernung A der Hälfte der horizontalen Breite entspricht und wobei eine Entfernung C einer Entfernung von einem Zentrum (1526) des Ellipsoids zu der zentralen Neigungsachse des zweiten abtastbaren Spiegels entspricht;
wobei ein koplanarer Winkel "CPA" für den ersten abtastbaren Spiegel so definiert ist, dass

$$CPA = 2tan^{-1}\left(\frac{A-C}{A+C}\right)$$

8. Ladar-Übertrager nach einem der Ansprüche 1 bis 7, wobei der erste abtastbare Spiegel einen Neigungswinkel $\alpha$ aufweist, wobei der zweite abtastbare Spiegel eine zentrale Neigungsachse aufweist, wobei ein 3D-Ellipsoid (1550) eine horizontale Breite aufweist, wobei eine Entfernung A der Hälfte der horizontalen Breite entspricht und wobei eine Entfernung C einer Entfernung von einem Zentrum (1526) des Ellipsoids zu der zentralen Neigungsachse des zweiten abtastbaren Spiegels entspricht;

wobei ein koplanarer Winkel "CPA" für den ersten abtastbaren Spiegel so definiert ist, dass

$$CPA = 2tan^{-1}\left(\frac{A-C}{A+C}\right) - \frac{\alpha}{2}.$$

9. Ladar-Übertrager nach einem der Ansprüche 1 bis 8, ferner Folgendes umfassend:
   einen optischen Feldsplitter/Inverter (300), der optisch stromabwärts von dem ersten und dem zweiten abtastbaren Spiegel positioniert ist, um einen durch den ersten und den zweiten abtastbaren Spiegel definierten Abtastbereich zu splitten und zu invertieren.

10. Ladar-Übertrager nach einem der Ansprüche 1 bis 9, wobei der erste und der zweite abtastbare Spiegel in einer nebeneinander angeordneten Anordnung positioniert sind.

11. Ladar-Übertrager nach einem der Ansprüche 1 bis 10, wobei der erste und der zweite abtastbare Spiegel die gleiche Größe aufweisen.

12. Verfahren zur Lichtlenkung für einen Ladar-Übertrager, wobei das Verfahren Folgendes umfasst:

    Übertragen von Licht zu einer Linse (1502) von einer Lichtquelle (1500, 200), die optisch stromaufwärts von der Linse positioniert ist, wobei das übertragene Licht eine Vielzahl von Ladar-Impulsen (108) umfasst;
    wobei die Linse die Ladar-Impulse zu einem ersten Abtastspiegel (1522) durchleitet;
    wobei der erste Abtastspiegel die übertragenen Ladar-Impulse zu einem ellipsoiden Spiegel (1510) reflektiert;
    wobei der ellipsoide Spiegel die übertragenen Ladar-Impulse zu einem zweiten Abtastspiegel (1524) reflektiert;
    wobei der zweite Abtastspiegel die übertragenen Ladar-Impulse reflektiert;
    eine Strahlabtaster-Steuerung (208), die (i) den ersten Abtastspiegel entlang einer ersten Achse und (ii) den zweiten Abtastspiegel entlang einer zweiten Achse ansteuert, um ein Abtastmuster innerhalb eines Abtastbereichs zu definieren; und
    einen Prozessor, der in Zusammenwirkung mit der Lichtquelle und der Strahlabtaster-Steuerung über kompressive Erfassung intelligent eine Teilmenge von Entfernungspunkten auswählt, die mit den Ladar-Impulsen von der Lichtquelle über den ersten Abtastspiegel, den ellipsoide Spiegel und den zweiten Abtastspiegel anvisiert werden sollen.

13. Verfahren nach Anspruch 12, wobei der ellipsoide Spiegel als versetzter ellipsoider Reimager positioniert ist.

14. Verfahren nach einem der Ansprüche 12 bis 13, wobei der erste Abtastspiegel, der zweite Abtastspiegel und der ellipsoide Spiegel positioniert sind, sodass in Bezug auf ein Ellipsoid: (i) der erste Abtastspiegel einen zentralen Bereich aufweist, der an einem ersten Brennpunkt des Ellipsoids positioniert ist, (ii) der zweite Abtastspiegel einen zentralen Bereich aufweist, der an einem zweiten Brennpunkt des Ellipsoids positioniert ist, und (iii) der ellipsoide Spiegel entlang des Ellipsoids an einer Position liegt, die optisch zwischen dem ersten Abtastspiegel und dem zweiten Abtastspiegel liegt.

**Revendications**

1. Émetteur ladar qui inclut un appareil de balayage, l'émetteur ladar comprenant :

   un premier miroir (1522) qui peut être balayé ;
   un deuxième miroir (1524) qui peut être balayé ;
   une lentille (1502) placée optiquement en amont du premier miroir qui peut être balayé ;
   un miroir ellipsoïdal (1510) qui est positionné optiquement entre le premier miroir qui peut être balayé et le deuxième miroir qui peut être balayé ;
   une source de lumière (1500, 200) placée optiquement en amont de la lentille, dans lequel la source de lumière est configurée pour transmettre la lumière sous forme d'impulsions ladar (108) à travers la lentille sur le premier miroir qui peut être balayé, après quoi le premier miroir qui peut être balayé réfléchit les impulsions ladar vers le miroir ellipsoïdal, et après quoi le miroir ellipsoïdal réfléchit les impulsions ladar vers le deuxième miroir qui peut être balayé ;
   un contrôleur d'appareil de balayage de faisceau (208) configuré pour commander (i) le premier miroir qui peut être balayé le long d'un premier axe et (ii) le deuxième miroir qui peut être balayé le long d'un deuxième axe pour définir un modèle de balayage dans une zone de balayage ; et
   un processeur en coopération avec la source de lumière et le contrôleur d'appareil de balayage de faisceau, le processeur étant configuré pour sélectionner intelligemment, par détection compressive, un sous-ensemble de points de plage pour le ciblage avec les impulsions ladar via le premier miroir qui peut être balayé, le miroir ellipsoïdal et le deuxième miroir qui peut être balayé.

2. Émetteur ladar selon la revendication 1, dans lequel le miroir ellipsoïdal est positionné comme un réimageur ellipsoïdal décalé.

3. Émetteur ladar selon l'une quelconque des revendications 1 à 2, dans lequel le premier miroir qui peut être balayé, le deuxième miroir qui peut être balayé et le miroir ellipsoïdal sont positionnés de telle sorte que, par rapport à un ellipsoïde (1550), (i) le premier miroir qui peut être balayé a une région centrale qui est positionnée à un premier foyer de l'ellipsoïde, (ii) le deuxième miroir qui peut être balayé a une région centrale qui est positionnée à un deuxième foyer de l'ellipsoïde, et (iii) le miroir ellipsoïdal se trouve le long de l'ellipsoïde à une position qui est optiquement entre le premier miroir qui peut être balayé et le deuxième miroir qui peut être balayé.

4. Émetteur ladar selon la revendication 3, dans lequel l'ellipsoïde a un axe principal et un axe de symétrie le long de l'axe principal, et dans lequel la position du miroir ellipsoïdal est hors de l'axe de symétrie.

5. Émetteur ladar selon l'une quelconque des revendications 1 à 4, dans lequel le premier miroir qui peut être balayé et le deuxième miroir qui peut être balayé comprennent des miroirs MEMS.

6. Émetteur ladar selon l'une quelconque des revendications 1 à 5, dans lequel la lentille est adaptée et positionnée pour fournir un point focal (1506) pour la lumière incidente, dans lequel le point focal se trouve entre le premier miroir qui peut être balayé et le miroir ellipsoïdal.

7. Émetteur ladar selon l'une quelconque des revendications 1 à 6, dans lequel le deuxième miroir qui peut être balayé a un axe d'inclinaison central, dans lequel un ellipsoïde 3D (1550) présente une largeur horizontale, dans lequel une distance A correspond à la moitié de la largeur horizontale, et dans lequel une distance C correspond à une distance d'un centre (1526) de l'ellipsoïde à l'axe d'inclinaison central du deuxième miroir qui peut être balayé ; dans lequel un angle coplanaire, « CPA », pour le premier miroir qui peut être balayé est défini de telle sorte que $\text{CPA} = 2tan^{-1}\left(\frac{A-C}{A+C}\right).$

8. Émetteur ladar selon l'une quelconque des revendications 1 à 7, dans lequel le premier miroir qui peut être balayé a un angle d'inclinaison $\alpha$, dans lequel le deuxième miroir qui peut être balayé a un axe d'inclinaison central, dans lequel un ellipsoïde 3D (1550) présente une largeur horizontale, dans lequel une distance A correspond à la moitié de la largeur horizontale, et dans lequel une distance C correspond à une distance d'un centre (1526) de l'ellipsoïde à l'axe d'inclinaison central du deuxième miroir qui peut être balayé ; dans lequel un angle coplanaire, « CPA », pour le premier miroir qui peut être balayé est défini de telle sorte que $\text{CPA} = 2tan^{-1}\left(\frac{A-C}{A+C}\right) - \frac{\alpha}{2}.$

9. Émetteur ladar selon l'une quelconque des revendications 1 à 8 comprenant en outre : un diviseur/inverseur de champ optique (300) placé optiquement en aval du premier et du deuxième miroir qui peuvent être balayés pour diviser et inverser une zone de balayage définie par le premier et le deuxième miroir qui peuvent être balayés.

10. Émetteur ladar selon l'une quelconque des revendications 1 à 9, dans lequel le premier et le deuxième miroir qui peuvent être balayés sont positionnés dans un agencement côte à côte.

11. Émetteur ladar selon l'une quelconque des revendications 1 à 10, dans lequel le premier et le deuxième miroir qui peuvent être balayés ont la même taille.

12. Procédé de guidage de la lumière pour un émetteur ladar, le procédé comprenant :

la transmission de la lumière vers une lentille (1502) à partir d'une source de lumière (1500, 200) positionnée optiquement en amont de la lentille, dans lequel la lumière transmise comprend une pluralité d'impulsions ladar (108) ; la lentille transmet les impulsions ladar transmises à un premier miroir (1522) de balayage ; le premier miroir de balayage réfléchit les impulsions ladar transmises vers un miroir ellipsoïdal (1510) ; le miroir ellipsoïdal réfléchit les impulsions ladar transmises vers un deuxième miroir (1524) de balayage ; le deuxième miroir de balayage réfléchit les impulsions ladar transmises ; un contrôleur d'appareil de balayage de faisceau (208) commandant (i) le premier miroir de balayage le long d'un premier axe et (ii) le deuxième miroir de balayage le long d'un deuxième axe pour définir un modèle de balayage dans une zone de balayage ; et un processeur, sélectionnant intelligemment, en coopération avec la source de lumière et le contrôleur d'appareil de balayage de faisceau, par détection compressive, un sous-ensemble de points de plage pour le ciblage avec les impulsions ladar de la source de lumière via le premier miroir de balayage, le miroir ellipsoïdal et le deuxième miroir de balayage.

13. Procédé selon la revendication 12, dans lequel le miroir ellipsoïdal est positionné comme un réimageur ellipsoïdal décalé.

14. Procédé selon l'une quelconque des revendications 12 à 13, dans lequel le premier miroir de balayage, le deuxième miroir de balayage et le miroir ellipsoïdal sont positionnés de telle sorte que, par rapport à un ellipsoïde, (i) le premier miroir de balayage a une région centrale qui est positionnée à un premier foyer de l'ellipsoïde, (ii) le deuxième miroir de balayage a une région centrale qui est positionnée à un deuxième foyer de l'ellipsoïde, et (iii) le miroir ellipsoïdal se trouve le long de l'ellipsoïde à une position qui se trouve optiquement entre le premier miroir de balayage et le deuxième miroir de balayage.

**Figure 1A**

**Figure 1B**

Figure 2

Figure 3

$$CPA = 2\tan^{-1}\left(\frac{A-C}{A+C}\right) - \frac{\alpha}{2}$$

(1528)

**Figure 4**

Figure 5

Figure 6

**Figure 7**

Figure 8

## REFERENCES CITED IN THE DESCRIPTION

**Patent documents cited in the description**

- US 62038065 A
- US 20160047895 A
- US 20160047896 A
- US 20160047897 A
- US 20160047898 A
- US 20160047899 A
- US 20160047903 A
- US 20160047900 A
- US 2011149360 A1
- US 2015378011 A1
- JP 2012252068 A
- US 62297126 A
- US 20170242102
- US 20170242105 A
- US 20170242106 A
- US 20170242107 A
- US 20170242109 A
- US 9933513 B